Europäisches Patentamt

European Patent Office

Office européen des brevets

(11) Publication number: **0 530 709 A1**

# EUROPEAN PATENT APPLICATION

(21) Application number: 92114747.6

(22) Date of filing: **28.08.92**

(51) Int. Cl.⁵: **C08F 2/44**, C08F 10/00

(30) Priority: **30.08.91 US 753360**

(43) Date of publication of application:
**10.03.93 Bulletin 93/10**

(84) Designated Contracting States:
**AT BE CH DE DK ES FR GB GR IT LI NL SE**

(71) Applicant: **UNION CARBIDE CHEMICALS & PLASTICS TECHNOLOGY CORPORATION**
**39 Old Ridgebury Road**
**Danbury, Connecticut 06817-0001(US)**

(72) Inventor: **Rhee, Aaron Seung-Joon,**
**7 Apple Hill Road**
**Belle Mead, New Jersey 08502(US)**
Inventor: **Victor, John Gregory**
**280 Farmer Road**
**Bridgewater, New Jersey 08807(US)**

(74) Representative: **Weinhold, Peter, Dr. et al**
**Patentanwälte Dipl.-Ing. G. Dannenberg Dr.**
**P. Weinhold Dr. D. Gudel Dipl.-Ing. S.**
**Schubert Dr. P. Barz Siegfriedstrasse 8**
**W-8000 München 40 (DE)**

(54) **Process for producing sticky polymers.**

(57) A process for producing sticky polymers at polymerization reaction temperatures in excess of the softening temperature of the sticky polymers in a gas-solids phase mechanically stirred bed polymerization reactor catalyzed by a transition metal catalyst, which comprises conducting the polymerization reaction above the softening temperatures of the sticky polymers in the presence of about 0.3 to about 60 weight percent, based on the weight of the final product of an inlet particulate material having mean particle size of from about 0.01 to about 150 micron meters whereby polymer agglomeration of the sticky polymers is maintained at a size suitable for continuously producing the sticky polymers.

EP 0 530 709 A1

Rank Xerox (UK) Business Services
(3.10/3.5x/3.0.1)

## BACKGROUND OF THE INVENTION

### Field of the Invention

The present invention relates to a process for producing sticky polymers and more particularly to a process for producing sticky polymers in gas solids phase mechanically agitated bed polymerization reactors at reaction temperatures in excess of the softening temperature of the sticky polymers.

### DESCRIPTION OF THE PRIOR ART

The term "sticky polymer" is defined as a polymer, which, although particulate at temperatures below the sticking or softening temperature, agglomerates at temperatures above the sticking or softening temperature. The term "sticking temperature", which, in the context of this specification, concerns the sticking temperature of particles of polymer in a fluidized bed, is defined as the temperature at which fluidization ceases due to excessive agglomeration of particles in the bed. The agglomeration may be spontaneous or occur on short periods of settling.

A polymer may be inherently sticky due to its chemical or mechanical properties or pass through a sticky phase during the production cycle. Sticky polymers are also referred to as non-free flowing polymers because of their tendency to compact into agglomerates of much larger size than the original particles. Polymers of this type show acceptable fluidity in a gas phase fluidized bed reactor; however, once motion ceases, the additional mechanical force provided by the fluidizing gas passing through the distributor plate is insufficient to break up the agglomerates which form and the bed will not refluidize. These polymers are classified as those, which have a minimum bin opening for free flow at zero storage time of two feet and a minimum bin opening for free flow at storage times of greater than five minutes of 4 to 8 feet or more.

Sticky polymers can also be defined by their bulk flow properties. This is called the Flow Function. On a scale of zero to infinity, the Flow Function of free flowing materials such as dry sand is infinite. The Flow Function of free flowing polymers is about 4 to 10, while the Flow Function of non-free flowing or sticky polymers is about 1 to 3.

Although many variables influence the degree of stickiness of the resin, it is predominantly governed by the temperature and the crystallinity of the resin. Higher temperatures of the resin increase its stickiness while less crystalline products such as very low density polyethylene (VLDPE), ethylene/propylene monomer (EPM), ethylene/propylene/diene monomer (EPDM) and essentially amorphous or elastomeric polypropylene usually display a larger tendency to agglomerate to form larger particles.

Sticky polymers are presently being produced at temperatures below the softening temperature of the polymer by a variety of well known techniques such as by slurry polymerization, gas-solids phase mechanically agitated stirred reactor polymerization, fluidized bed reactor polymerization and other techniques. Descriptions of the various techniques are available in the literature such as for example in the work of F.P. Baldwin and G. Ver Strate, "Polyolefin Elastomers Based on Ethylene and Propylene", Rubber Chem. & Technology, vol. 45, pp. 709-881 (1972).

It is emphasized that the prior art has heretofore attempted to produce sticky polymers at temperatures below the softening temperature of the polymers. This is based primarily on the fact that operating at or above the softening temperature would cause serious agglomeration problems. Indeed U.S. Patent 4,970,279 issued November 13, 1990 which discloses use of 0.005% to less than 0.2% of a pulverulent inorganic substance during the reaction, nevertheless cautions against the use of temperatures in excess of the softening temperatures of the produced polyolefin. Moreover, this patent specifically discourages use of quantities of pulverulent inorganic substances in the reactor in excess of 0.2% by weight since as stated therein there is no further improvement in the polymerization or copolymerization process in the gaseous phase and use of amounts in excess of 0.2% deleteriously affect the quality of the polymer or copolymer produced.

More recently, U.S. Patent 4,994,534 issued February 19, 1991 discloses a process for producing sticky polymers at polymerization reaction temperatures in excess of the softening temperature of the sticky polymer in a fluidized bed reactor by using about 0.3 to about 80 weight percent of an inert particulate material having a mean particle size of from about 0.01 to about 10 microns.

It has now been found that these inert particulate materials, when employed in amounts of about 0.3 to about 80% based on the weight of final product, permit operation in a gas-solid phase mechanically stirred bed polymerization reactor at a temperature in excess of the softening temperature of the sticky polymer.

2

## SUMMARY OF THE INVENTION

Broadly contemplated, the present invention provides a process for producing sticky polymers at polymerization reaction temperatures in excess of the softening temperature of said sticky polymers in a gas-solids phase mechanically stirred polymerization reactor in the presence of a catalyst, which comprises conducting said polymerization reaction above the softening temperatures of said sticky polymers in the presence of about 0.3 to about 80 weight percent, preferably about 5% to about 75% based on the weight of the final product of an inert particulate material having a mean particle size of from about 0.01 to about 150 micrometers or microns whereby polymer agglomeration of said sticky polymers is maintained at a size suitable for continuously producing said sticky polymers.

In the case when the inert particulate material is a carbon black or silica, the mean particle size is the average size of aggregate.

## DETAILED DESCRIPTION OF THE INVENTION

In general, a mechanically stirred bed polymerization reactor consists of a vessel, normally cylindrical, having multiple stirrers or plows mounted on a central shaft that rotates at a given (or variable) rpm to agitate polymer particles in the reactor. Normally some of the plows are designed in a way that they can provide back mixing of polymer particles, which improves the product quality. The shaft is driven by a motor normally located outside of the reactor. A catalyst, monomers and other necessary gases or liquids are normally introduced into the reactor through nozzles provided at various locations in the reactor shell. A mechanically stirred bed polymerization reactor is commonly placed horizontally, but it can be mounted vertically also. The reactor can be operated in a batch mode as well as in a continuous mode depending on process requirements. Examples of mechanically stirred bed polymerization reactors which can be employed in the present invention are essentially disclosed in U.S. Patents 4,129,701, 4,525,548, and 4,627,735.

Examples of sticky polymers, which can be produced by the process of the present invention include ethylene/propylene rubbers and ethylene/propylene/diene termonomer rubbers, polybutadiene rubbers, high ethylene content propylene/ethylene block copolymers, poly (1-butene) or essentially amorphous or elastomeric polypropylenes(when produced under certain reaction conditions), very low density (low modulus) polyethylenes i.e., ethylene/butene rubbers or hexene containing terpolymers, ethylene/propylene /ethylidenenorbornene and ethylene/propylene hexadiene terpolymers of low density.

Subject process can be carried out in a batch or continuous mode, the latter being preferred.

Characteristic of two types of resins which can be produced in subject process are as follows:

One type of resin is an ethylene/propylene or ethylene/propylene/diene rubber containing 25 to 65 weight percent propylene and 0.1 to 15 weight percent diene. This material is sticky to the touch at reactor temperatures of 20°C to 40°C and has a severe tendency to agglomerate when allowed to settle for periods of more than two to five minutes. Another sticky resin is an ethylene/butene copolymer produced at reactor temperatures of 50°C to 80°C at density levels of 880 to 905 kilograms per cubic meter and melt index levels of 1 to 20 and chlorinated or chlorosulfonated after being produced in the fluidized bed reactor.

The catalyst system can be any one of a number used in the gas-solid phase polymerization of olefins. The catalyst system preferably employed is a Ziegler-Natta type catalytic system formed by a combination of a solid catalyst based on at least one compound of a transition metal belonging to Groups IV, V, or VI of the Periodic Table of Elements, and a co-catalyst comprising at least one organometallic compound of a metal of Groups I to III of this Table, or in the presence of a solid catalyst containing a chromium oxide compound activated by a thermal treatment in a non-reducing atmosphere.

The inert particulate material employed according to the present invention are materials which are chemically inert to the reaction. Examples of inert particulate materials include carbon black, silica, talc, clay and other like materials. Carbon blacks and silicas are the preferred materials. The carbon black materials employed have a primary particle size of about 1 to 100 nano meters and an average size of aggregate (primary structure) of about 0.01 to about 10 microns. The specific surface area of the carbon black is about 30 to 1,500 $m^2$/gm and display a dibutylphthalate (DBP) absorption of about 10 to about 750 cc/100 grams.

The silicas which can be employed are amorphous silicas having a primary particle size of about 5 to 50 nanometers and an average size of aggregate of about 0.1 to about 10 microns. The average size of agglomerates of silica is about 2 to about 120 microns. The silicas employed have a specific surface area of about 50 to 500 $m^2$/gm and a dibutylphthalate (DBP) absorption of about 100 to 400 cc/100 grams.

Non-aggregated silicas, clays, talc and other powdery materials can also be employed according to the present invention and they have an average particle size of about 0.01 to about 150 microns and a specific surface area of about 2 to 350 $m^2$/gm. They exhibit oil absorption of about 20 to about 300 cc per 100 gms.

The amount of inert particulate material utilized generally depends on the type of material utilized and the type of polymer produced. When utilizing carbon black or amorphous silica as the inert material, they can be employed in amounts of about 0.3 to about 50% by weight preferably about 5% to about 30% based on the weight of the final product produced. When non-aggregated silicas, clays, talc or other powdery materials or mixtures thereof are employed as the inert particulate material, the amount can range from about 0.3 to about 80% based on the weight of the final product preferably about 12% to 75% by weight.

The inert particulate materials can be introduced into the reactor at various locations in the reactor shell such as top, bottom and sides of the reactor. It is preferred to treat the inert particulate material prior to entry into the reactor to remove traces of moisture and oxygen. This can be accomplished by purging the material with nitrogen gas, and heating by conventional procedures.

According to the present invention, the gas-solids mechanically stirred reactor is operated above the softening temperature of the polymer particles. The softening temperature is a function of resin density as shown in Fig. 1. For example, EPR rubbers of density 0.860 gm/cm$^3$ has a softening point of about 30°C whereas at a density of about 0.90, the softening point is about 67°C.

Reactor pressures used can be typically in the range of about 300 psig to about 450 psig. Partial pressures of ethylene ($C_2$) can range typically between about 90 to about 125 psig. In addition propylene ($C_3$) content in the polymer can be controlled by adjusting its feed rate to maintain a constant $C_3/C_2$ molar ratio in the gas phase typically in the range of about 0.5 to about 1.5

Reactor temperatures can be controlled to values in the range of about 20°C to about 110°C although temperatures in the range of about 50°C to about 60°C are typical for EPR production.

The liquid diene termonomer is preferably ENB which is heated prior to introduction into the reactor.

The inert particulate material can be batch charged from a drying/storage vessel to the reactor prior to onset of polymerization; however, continuous feed is possible through the use of a calibrated feed screw capable of feeding the material to the reactor at rates varying with the polymer production.

A typical run commences with the inert particulate material added to the reactor in an inert $N_2$ atmosphere at low pressure. Monomers are charged to the reactor and feeds adjusted until the desired gas composition is reached. Initial charges of alkyl and promoter (based on the amount of alkyl that can evaporate in the reactor volume in addition to that consumed by the inert particulate material) and ENB termonomer, if used, are added prior to starting catalyst feed. After catalyst feed starts, monomers are added to the reactor sufficient to maintain gas concentrations and ratios, except for ENB which is added as a proportion of the polymer production rate. Alkyl and promoter are fed continuously to react with poisons in the monomers and to maintain a minimum residue levels in the polymer. As the catalyst inventory builds up, polymer production rate increases to about 4 to 6 lbs/hr, at which point catalyst feed is either discontinued or reduced to maintain constant polymer production rate. After the desired batch weight is made, monomers are purged and stabilizers are added. The batch is then discharged into a bag, open to atmosphere.

The following examples will illustrate the invention.

Two runs were conducted and identified as examples 1 and 2. In Example 1, no inert particulate material was added. In Example 2, carbon black was added as indicated in Table 1. The carbon black added was Statex N-650 produced by Columbian Chemicals Company. The carbon black had a primary particle size of about 55nm and an average size of aggregate of about 0.55$\mu$m. The specific surface area of carbon black was 39m$^2$/g and displayed a dibutylphthalate absorption of about 122cc/100 grams.

In the Examples a mechanically stirred bed polymerization reactor including a vertical cylinder was used. The reactor was a gas-solids two-phase stirred bed reactor which provided back mixing of polymer particles. A set of four plows mounted horizontally on a central shaft rotated at 200 rpm to keep the particles in the reactor mechanically stirred. The reactor cylinder swept by these plows measured 40.6 cm (16 in.) long by 39.7 cm (15.6 in.) in diameter, resulting in a mechanically stirred volume of 46 liters (1.6 ft$^3$). The gas volume, larger than the mechanically stirred volume due to the vertical cylinder chamber, totalled 54.6 liters (1.93 ft$^3$).

A disengager vessel was mounted atop of the vertical cylinder on the reactor to help operators maintain tighter control over gas compositions. This vessel had a gas volume of 68 liters (2.41 ft$^3$), more than doubling the gas volume of the reactor.

Nitrogen gas was continually recirculated through the reactor, and the disengager by a low $\Delta$P blower, so that the gas composition was homogeneous throughout. Monomers and hydrogen were fed to the reactor continuously by control valves. Hydrogen was used to control molecular weight of the product, more specifically the Mooney viscosity of the product. Propylene ($C_3$) content in the polymer was controlled by adjusting its feed rates to maintain a constant $C_3/C_2$ molar ratio in the gas phase. The $C_3/C_2$ ratio was determined from the gas composition measured at intervals by a gas chromatograph analyzer. Liquid ENB termonomer was heated and then was added to the reactor with the other monomer feeds. The ENB feed rate was varied proportional to the polymer production rate. Molecular weight of the ethylene-propylene rubber (EPR) was controlled by adjusting hydrogen feed rate to maintain a constant $H_2/C_2$ ratio in the gas phase. Nitrogen made up the balance of the composition of the gas, entering with the catalyst and leaving through a small vent for the reactor gases.

The reactor was cooled by an external jacket of chilled glycol. The bed temperature was measured with an RTD temperature probe in a thermowell protruding into the bed at a 60° angle below horizontal, between the inner set of plows.

Supported vanadium catalyst was added continuously, as were ethylene and propylene and ENB monomers. Alkyl cocatalyst, triisobutyl aluminum (TiBA), and promoter, 1,1,1-trichloroethane, were also added continuously, at a 1:1 molar ratio with one another. The cocatalyst feed rate was adjusted to exceed minimum residue levels, typically 200 to 1,000 ppm of aluminum in the product, so that catalyst activity, and comonomer and hydrogen response were not compromised.

The inert particulate material was batch charged from a drying/storage vessel to the reactor prior to the onset of polymerization; however, continuous feed is possible through the use of a calibrated feed screw capable of feeding the material to the reactor at rates varying with the polymer production.

Typical batch yields of granular polymer in the mechanically stirred reactor are from about 20 to 25 lbs, with about 30 to 35 lbs being the upper limit. Runs typically last from about 4 to about 6 hours but can be as long as necessary provided the reactor fill capacity is not exceeded. However, when severe agglomeration of EPR resin occurs in the reactor as is normally evidenced by unusual noise from the reactor, the reactor operation is terminated early as shown in Example 1. The conditions and results are indicated in Table I

In these two Examples, the degree of EPR resin agglomeration occurred in this mechanically stirred bed reactor was determined by measuring the fraction of each EPR batch that was retained in U.S. Sieve No. 8 when a Ro-Tap sieve shaker was used. This was because the particles of this size could only be formed by agglomeration of smaller particles in the reactor. Therefore, the "% granular" shown in Table 1 is defined as the weight percentage of the granular resin in each batch that passes through the 8 mesh screen.

## TABLE 1

| Examples | 1 | 2 |
|---|---|---|
| **CATALYST** | | |
| Type | T-1 | T-1 |
| Batch | 476145 | 476145 |
| Vanadium (mmol/g) | 0.434 | 0.434 |
| THF (wt %) | 9.33 | 9.33 |
| Aluminum (mmols/g) | 1.371 | 1.371 |
| **REACTOR CONDITIONS** | | |
| Temperature (°C) | 50 | 50 |
| Pressure (psig) | 400 | 350 |
| Run Duration (hrs) | 2.25 | 4.08 |
| Catalyst Feed Duration (hrs) | 2.25 | 2.87 |
| Catalyst Added (grams) | 7.1 | 9.8 |
| $H_2/C_2$ Molar Ratio | 0 | 0.00076 |
| Comonomer | Propylene | Propylene |
| Comonomer/$C_2$ ratio (average) | 1.37 | 1.20 |
| $C_2H_4$ partial pressure (psi) | 30 (max) | 97 |
| $C_2H_4$ added (lbs) | 2.69 | 8.75 |
| $C_3H_6$ added (lbs) | 3.39 | 10.84 |
| ENB added (lbs) | 0.136 | 0.765 |
| Inert Particulate Material | none | N650 carbon bl. |
| Inert Particulate Material added (lbs) | 0 | 4.75 |
| Cocatalyst | 10% TIBA | 10% TIBA |
| Total cocatalyst added (mgmols) | 97 | 144 + 212 |
| Cocatalyst/V molar ratio as fed | 31 | 50 |
| Promoter | 25% 111TCE | 25% 111TCE |
| Total promoter added (mgmols) | 85 | 180 |
| Promoter/V molar ratio as fed | 27 | 42 |
| Zinc Oxide added (grams) | 18 | 12 g |
| **RESIN PROPERTIES** | | |
| Batch Weight (lbs) | 6.0 | 20 |
| Amount < 8 mesh (lbs) | 0.33 | virtually all |
| % Granular | 5.5 | >95% |
| Flow Index | 3.9 | 3.2 |
| Wt % $C_3$/wt % $C_2$/wt % ENB | 45.8/51.9/2.3 | 41.7/55.6/2.7 |
| % ENB added incorporated in resin | 99 | 54 |
| Fluidization Aid residue, wt.% | 0 | 23.7 |
| Vanadium, ppm | not measured | 24 |
| Aluminum, ppm | not measured | 1400 |
| Al/V molar ratio achieved | not measured | 110 |
| Zinc, ppm | not measured | 1250 |
| Comments | | agglomeration forced early termination |

Advantages of the invention can be found in the reduction in agglomeration; improved reactor operability and most sifnificantly, the invention permits reaction temperatures in excess of the softening temperature of the sticky polymer.

6

## Claims

1. A process for producing sticky polymers at polymerization reaction temperatures in excess of the softening temperature of said sticky polymers in a gas-solids phase mechanically stirred polymerization reactor in the presence of a catalyst, which comprises conducting said polymerization reaction above the softening temperatures of said sticky polymers in the presence of about 0.3 to about 80 weight percent, based on the weight of the final product of an inert particulate material having a mean particle size of from about 0.01 to about 150 microns whereby polymer agglomeration of said sticky polymers is maintained at a size suitable for continuously producing said sticky polymers.

2. A process according to claim 1 wherein said inert particulate material is selected from the group consisting of carbon black, silica, clay, talc, and other powdery materials.

3. A process according to claim 1 wherein said inert particulate material is carbon black having a primary particle size of about 1 to about 100 nanometers, an average size of aggregate of about 0.01 to about 10 microns, a specific surface area of about 30 to about 1,500 $m^2$/gm and a dibutylphthalate absorption of about 10 to about 750 cc/100 grams.

4. A process according to claim 1 wherein said inert particulate material is amorphous silica having a primary particle size of about 5 to 50 nanometers, an average size of aggregate of about 0.1 to about 10 microns, a specific surface area of about 50 to 500 $m^2$/gm and a dibutylphthalate absorption of about 100 to 400 cc/100 grams.

5. A process according to claim 1 wherein said inert particulate material is a non-aggregated silica, clay, talc or other powdery materials having an average particle size of about 0.01 to about 150 microns, a specific surface area of about 2 to 350 $m^2$/gm and an oil absorption of about 20 to about 300 cc per 100 gm.

6. A process according to at least one of the claims 1 to 5 wherein said sticky polymers are:
   a. ethylene propylene rubbers;
   b. ethylene propylene diene termonomer rubbers;
   c. polybutadiene rubbers; and
   d. high ethylene content propylene ethylene block copolymers.
   e. essentially amorphous or elastomeric polypropylenes.

7. A process according to claim 6 wherein said ethylene propylene diene termonomers are ethylene/propylene/ethylidenenorbornene termonomers.

8. A process according to claim 6 wherein said ethylene propylene diene termonomers are ethylene/propylene/hexadiene termonomers.

9. A process according to at least one of the claims 1 to 8 wherein said inert particulate material is employed in an amount of about 5% to about 75% based on the weight of the final polymer product.

10. A process according to at least one of the claims 1 to 9 wherein said inert particulate material is heated and purged with nitrogen prior to entry into said reactor.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| Y | US-A-5 041 473 (YIMSAN GAU)<br>* the whole document *<br>--- | 1-10 | C08F2/44<br>C08F10/00 |
| Y | US-A-3 265 658 (O. LIETHEN)<br>* the whole document *<br>--- | 1-10 | |
| Y | EP-A-0 422 452 (UNION CARBIDE CHEMICALS AND PLASTICS COMPANY, INC.)<br>* the whole document * | 1-10 | |
| D,Y | & US-A-4 994 534 (RHEE, SEUNG JOON)<br>--- | 1-10 | |
| A | EP-A-0 266 074 (BP CHEMICALS LTD.)<br>* claims 1-9 * | 1 | |
| D,A | & US-A-4 970 279 (BAILLY)<br><br>----- | | |

| | |
|---|---|
| | **TECHNICAL FIELDS SEARCHED (Int. Cl.5 )** |
| | C08F |

The present search report has been drawn up for all claims

| Place of search | Date of completion of the search | Examiner |
|---|---|---|
| THE HAGUE | 29 DECEMBER 1992 | PERMENTIER W.A. |